(19) Europäisches Patentamt
European Patent Office
Office européen des brevets

(11) EP 4 286 478 A1

(12) EUROPEAN PATENT APPLICATION
published in accordance with Art. 153(4) EPC

(43) Date of publication:
06.12.2023 Bulletin 2023/49

(21) Application number: 22746289.2

(22) Date of filing: 28.01.2022

(51) International Patent Classification (IPC):
*C08L 33/14* (2006.01) *C08L 51/04* (2006.01)
*C08L 83/10* (2006.01) *C08K 3/22* (2006.01)

(52) Cooperative Patent Classification (CPC):
C08K 3/22; C08L 33/14; C08L 51/04; C08L 83/10

(86) International application number:
PCT/KR2022/001601

(87) International publication number:
WO 2022/164263 (04.08.2022 Gazette 2022/31)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 29.01.2021 KR 20210013589
27.01.2022 KR 20220012723

(71) Applicant: Lotte Chemical Corporation
Seoul, 05551 (KR)

(72) Inventors:
- HONG, Jaekeun
Uiwang-si, Gyeonggi-do 16073 (KR)
- KWON, Keehae
Uiwang-si, Gyeonggi-do 16073 (KR)
- KIM, In-Chol
Uiwang-si, Gyeonggi-do 16073 (KR)
- RYOO, Heekyoung
Uiwang-si, Gyeonggi-do 16073 (KR)

(74) Representative: Germain Maureau
12, rue Boileau
69006 Lyon (FR)

# (54) THERMOPLASTIC RESIN COMPOSITION AND MOLDED ARTICLE USING SAME

(57) Provided is a thermoplastic resin composition including, based on (A) 100 parts by weight of a polyalkyl (meth)acrylate resin; (B) 1 to 3 parts by weight of a core-shell copolymer including an acrylic rubber polymer core and a (meth)acrylate-based shell; (C) 2 to 5 parts by weight of a siloxane-polyester copolymer; and (D) 1 to 5 parts by weight of zinc oxide (ZnO).

EP 4 286 478 A1

## Description

### [Technical Field]

The present invention relates to a thermoplastic resin composition and a molded product using the same.

### [Background Art]

Recently, a thermoplastic resin variously applied to electric/electronic products, automobiles, construction materials, leisure goods, and the like has been rapidly replacing a conventional glass or metal area. Accordingly, there is an increasing demand for thermoplastic resins capable of implementing excellent impact resistance, water resistance, scratch resistance, and antibacterial properties.

In particular, as technology trends for vehicles such as shared electric vehicles and self-driving cars change, the perception of the interior of the vehicle is changing to a living space rather than a space only for driving. Interior materials are being introduced, and the use of antibacterial/antifungal materials is required as interior materials.

In order to introduce an antibacterial/antifungal material as the interior material, to fundamentally prevent contamination of unpainted materials used in automobile interior parts and to maintain safe sanitary conditions, various methods have been attempted, such as antifouling (anti-fouling) coating, antibacterial additives, or antistatic additives.

However, in the case of scratch-resistant materials or antibacterial materials known so far, additives are often eluted to the surface of the material to exhibit properties, and since scratch resistance or antibacterial properties are imparted by applying polymeric or inorganic materials, it is difficult to maintain permanent properties.

Therefore, there is a need for research into thermoplastic resin compositions having excellent scratch resistance and antibacterial properties.

### [Disclosure]

### [Description of the Drawings]

[Technical Problem]

An embodiment provides a thermoplastic resin composition having excellent scratch resistance, abrasion resistance, water resistance, chemical resistance, and antibacterial properties, and a molded product using the same.

[Technical Solution]

According to an embodiment, provided a thermoplastic resin composition including, based on (A) 100 parts by weight of a polyalkyl (meth)acrylate resin, (B) 1 to 3 parts by weight of a core-shell copolymer including an acrylic rubber polymer core and a (meth)acrylate-based shell; (C) 2 to 5 parts by weight of a siloxane-polyester copolymer; and (D) 1 to 5 parts by weight of zinc oxide (ZnO).

A glass transition temperature (Tg) of the (A) polyalkyl (meth) acrylate resin may be100 to 150 °C.

A weight average molecular weight of the (A) polyalkyl (meth)acrylate resin may be 50,000 to 200,000 g/mol.

The (A) polyalkyl (meth)acrylate resin may be a polymethyl methacrylate resin.

The (B) core-shell copolymer including the acrylic rubber polymer core and the (meth)acrylate shell may be a core-shell copolymer including an acrylic rubber polymer core in which C1 to C20 linear alkyl acrylate monomers and aromatic vinyl monomers are crosslinking copolymerized; and a shell in which a (meth)acrylate-based compound is graft-copolymerized onto the acrylic rubber polymer core.

The (B) core-shell copolymer including the acrylic rubber polymer core and the (meth)acrylate shell may be a core-shell copolymer in which polymethyl methacrylate forms a shell on the butyl acrylate-styrene crosslinked copolymer core.

An average particle diameter of the acrylic rubber polymer may be 0.5 to 5.0 μm.

The (C) siloxane-polyester copolymer may be represented by Chemical Formula 1.

[Chemical Formula 1]

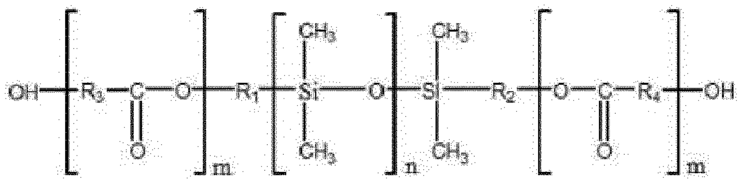

In Chemical Formula 1, $R_1$, $R_2$, $R_3$, and $R_4$ are each independently an alkylene group having 1 to 5 carbon atoms, and m and n are integers greater than or equal to 1.

The (D) zinc oxide may have an average particle diameter of 0.5 to 3 μm and a BET specific surface area of 1 to 10 $m^2/g$.

The (D) zinc oxide has a peak position 2θ value of 35 to 37 ° in X-ray diffraction (XRD) analysis, and a crystallite size value of 1,000 to 2,000 Å according to Equation 1.

[Equation 1]

$$\text{crystallite size} = \frac{k\lambda}{\beta\cos\theta}$$

In Equation 1, k is the shape factor, λ is the X-ray wavelength, β is the FWHM value of the X-ray diffraction peak, and θ is the peak position value (peak position degree).

The (D) zinc oxide may have a size ratio (B/A) of 0.01 to 1 between peak A of 370 to 390 nm and peak B of 450 to 600 nm when measuring photoluminescence.

The thermoplastic resin composition may further include (E) an acrylic rubber modified vinyl-based graft copolymer.

A weight ratio of the (E) acrylic rubber modified vinyl-based graft copolymer and the (A) polyalkyl (meth) acrylate resin may be 1:1.5 to 1:4.

The thermoplastic resin composition may further include at least one additive selected from a flame retardant, a nucleating agent, a coupling agent, a filler, a plasticizer, an impact modifier, a lubricant, a release agent, a heat stabilizer, an antioxidant, a UV stabilizer, a pigment, and a dye.

In another embodiment, a molded product manufactured from the thermoplastic resin composition is provided.

**[Advantageous Effects]**

It is possible to provide a thermoplastic resin composition having excellent scratch resistance, abrasion resistance, water resistance, chemical resistance, and antibacterial properties, and a molded product manufactured therefrom.

**[Mode for Invention]**

Hereinafter, embodiments of the present invention are described in detail. However, these embodiments are exemplary, the present invention is not limited thereto and the present invention is defined by the scope of claims.

In the present specification, unless otherwise mentioned, "copolymerization" refers to a block copolymerization, a random copolymerization, or a graft-copolymerization and "copolymer" refers to a block copolymer, a random copolymer, or a graft copolymer.

In the present specification, unless otherwise mentioned, the average particle diameter of the rubber polymer refers to a volume average diameter, and means a Z-average particle diameter measured using a dynamic light scattering analysis equipment.

In the present specification, unless otherwise mentioned, the average particle diameter of zinc oxide is a particle diameter (D50) corresponding to 50% of a weight percentage in a particle size distribution curve of single particles (particles do not aggregate to form secondary particles), which are measured by using a particle size analyzer (Laser Diffraction Particle Size Analyzer LS 13 320, Beckman Coulter, Inc.).

In the present specification, unless otherwise mentioned, the weight average molecular weight is measured by dissolving a powder sample in an appropriate solvent and then performing gel permeation chromatography (GPC) with a 1200 series made by Agilent Technologies Inc. (a standard sample is polystyrene made by Shodex).

In the present specification, unless otherwise mentioned, the specific surface area of zinc oxide is measured using a nitrogen gas adsorption method, using a BET analysis device (Surface Area and Porosity Analyzer ASAP 2020, Micromeritics Instruments Co., Ltd.).

A thermoplastic resin composition according to an embodiment includes, based on (A) 100 parts by weight of a polyalkyl (meth)acrylate resin, (B) 1 to 3 parts by weight of a core-shell copolymer including an acrylic rubber polymer core and a (meth)acrylate-based shell; (C) 2 to 5 parts by weight of a siloxane-polyester copolymer; and (D) 1 to 5 parts by weight of zinc oxide (ZnO). Hereinafter, each component included in the thermoplastic resin composition will be described in detail.

## (A) Polyalkyl (meth) Acrylate Resin

The thermoplastic resin composition according to an embodiment includes (A) a polyalkyl (meth) acrylate resin. The (A) polyalkyl (meth) acrylate resin can impart scratch resistance to thermoplastic resin compositions.

The (A) polyalkyl (meth)acrylate resin may be a polymer of C1 to C10 alkyl (meth)acrylate or a combination thereof.

The (A) polyalkyl (meth)acrylate resin may be obtained by polymerizing raw material monomers by a known polymerization method such as suspension polymerization, bulk polymerization, or emulsion polymerization.

The (A) polyalkyl (meth)acrylate resin may have a glass transition temperature (Tg) of 100 to 150 °C, for example, 110 to 130 °C.

The (A) polyalkyl (meth)acrylate resin may have a weight average molecular weight of 50,000 to 200,000 g/mol, for example, 70,000 to 150,000 g/mol. When the weight average molecular weight of the (A) polyalkyl (meth)acrylate resin satisfies the above ranges, the thermoplastic resin composition including the polyalkyl (meth)acrylate resin may exhibit excellent scratch resistance and fluidity.

The (A) polyalkyl (meth)acrylate resin may be a polymethyl methacrylate resin. The polymethyl methacrylate resin may be a copolymer of a monomer mixture including 80 to 99 wt% of methyl methacrylate and 1 to 20 wt% of methyl acrylate.

## (B) Core-shell Copolymer Including Acrylic Rubber Polymer Core and (Meth)acrylate-based Shell

The thermoplastic resin composition according to an embodiment includes (B) a core-shell copolymer including an acrylic rubber polymer core and a (meth)acrylate-based shell. The (B) core-shell copolymer having an acrylic rubber polymer core-(meth)acrylate-based shell structure serves to reinforce various physical properties of the thermoplastic resin composition, such as impact resistance, mechanical properties, and appearance properties.

In an embodiment, in the (B) core-shell copolymer including the acrylic rubber polymer core and the (meth)acrylate shell, a (meth)acrylate-based polymer is graft-copolymerized onto the acrylic rubber polymer core to form a shell.

The acrylic rubber polymer may be a crosslinked polymer of acrylic monomers which are a C1 to C20 linear or C1 to C20 branched alkyl acrylate such as ethyl acrylate or butyl acrylate, a C3 to C20 cyclic alkyl acrylate, a C1 to C20 linear or C2 to C20 branched alkyl methacrylate, C3 to C20 cyclic alkyl methacrylate, or a combination thereof, and may be a crosslinked copolymer of the acrylic monomer and one or more aromatic vinyl monomers capable of radical polymerization therewith.

In the crosslinked copolymer of the acrylic monomer and at least one aromatic vinyl monomer capable of radical polymerization with the acrylic monomer, a weight of the component derived from the aromatic vinyl monomer may be 1 to 20 wt%, for example 5 to 20 wt% based on a total weight of the acrylic rubber polymer core.

The aromatic vinyl monomer may be styrene, o-ethyl styrene, m-ethyl styrene, p-ethyl styrene, $\alpha$-methyl styrene, o-t-butyl styrene, bromo styrene, chloro styrene, trichloro styrene, or a combination thereof.

The (meth)acrylate-based compound constituting the (meth)acrylatebased shell may be methacrylate, acrylate, methyl methacrylate, methyl acrylate, ethyl methacrylate, ethyl acrylate, propyl methacrylate, propyl acrylate, butyl methacrylate, butyl acrylate, or a combination thereof.

In an embodiment, the (B) core-shell copolymer including the acrylic rubber polymer core and the (meth)acrylate shell may be a core-shell copolymer including an acrylic rubber polymer core in which C1 to C20 linear alkyl acrylate monomers and aromatic vinyl monomers are crosslinking copolymerized; and a shell in which a (meth)acrylate-based compound is graft-copolymerized onto the acrylic rubber polymer core.

The (B) core-shell copolymer including the acrylic rubber polymer core and the (meth)acrylate shell may include 40 to 80 wt% of the acrylic rubber polymer core, and 20 to 60 wt% of the (meth)acrylate-based shell. Weather resistance and impact resistance of the thermoplastic resin composition may be improved within the above weight range.

In an embodiment, the (B) core-shell copolymer including the acrylic rubber polymer core and the (meth)acrylate shell may be a core-shell copolymer in which polymethyl methacrylate forms a shell on the butyl acrylate-styrene crosslinked copolymer core.

In an embodiment, an average particle diameter of the (B) acrylic rubber polymer core may be 0.5 to 5.0 μm, for example 1.0 to 3.0 μm, for example 1.0 to 2.0 μm. Within these ranges, the thermoplastic resin composition may have excellent impact resistance and scratch resistance.

In an embodiment, the (B) core-shell copolymer including the acrylic rubber polymer core and the (meth)acrylate shell may be included in an amount of 1 to 3 parts by weight, for example 1 to 2 parts by weight based on 100 parts by weight of the (A) polyalkyl (meth) acrylate resin. Within these ranges, the thermoplastic resin composition may have excellent impact resistance and scratch resistance.

**(C) Siloxane-Polyester Copolymer**

The thermoplastic resin composition according to an embodiment may include (C) a siloxane-polyester copolymer. The (C) siloxane-polyester copolymer may improve scratch resistance of the thermoplastic resin composition.

The (C) siloxane-polyester copolymer may be represented by Chemical Formula 1:

[Chemical Formula 1]

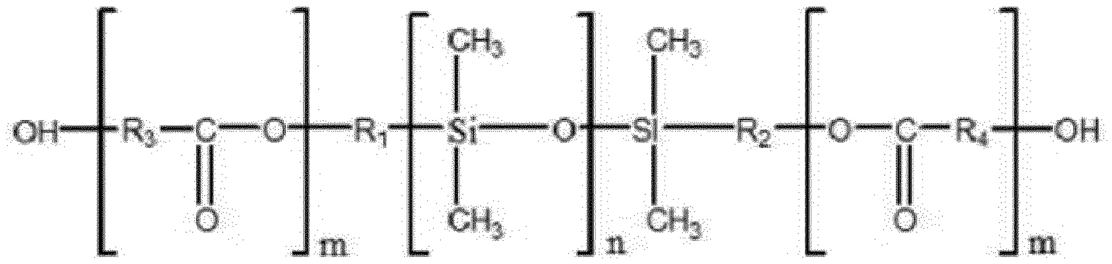

In Chemical Formula 1, $R_1$, $R_2$, $R_3$ and $R_4$ are independently an alkylene group having 1 to 5 carbon atoms, m and n are integers greater than or equal to 1.

In an embodiment, in Chemical Formula 1, $R_1$ and $R_2$ may be $-(CH_2)_3-$, $R_3$ and $R_4$ may be $-(CH_2)_5-$, and m and n may be integers of 1 or more satisfying m:n = 18:30.

The (C) siloxane-polyester copolymer may be included in an amount of 2 to 5 parts by weight, for example, 2 to 4 parts by weight, based on 100 parts by weight of the (A) polyalkyl (meth)acrylate resin. Within the parts by weight ranges, the thermoplastic resin composition may have excellent scratch resistance and impact resistance.

**(D) Zinc Oxide**

The thermoplastic resin composition according to an embodiment may include (D) zinc oxide. The (D) zinc oxide performs a function of imparting antibacterial properties to the thermoplastic resin composition and a molded product manufactured therefrom, and also functions to improve wear resistance and appearance characteristics.

In an embodiment, the (D) zinc oxide may have an average particle diameter of 0.5 μm or more, for example 0.8 μm or more, for example 1 μm or more, and for example 3 μm or less, for example 2.5 μm or less, for example 2 μm or less, for example 0.5 to 3 μm, for example 0.5 to 2.5 μm, for example 0.5 to 2 μm, for example 0.8 to 2 μm. In the above average particle diameter ranges, antibacterial properties and appearance characteristics of the thermoplastic resin composition and a molded product manufactured therefrom may be improved.

The (D) zinc oxide may have a BET specific surface area of 1 $m^2/g$ or more, for example 10 $m^2/g$ or less, for example 9 $m^2/g$ or less, for example 8 $m^2/g$ or less, for example 7 $m^2/g$ or less, for example, 1 to 10 $m^2/g$, for example, 1 to 7 $m^2/g$. Within the ranges of the BET specific surface area, antibacterial properties, light resistance, and weather resistance of the thermoplastic resin composition and a molded product manufactured therefrom may be improved.

The purity of the zinc oxide (D) measured by weight remaining at a temperature of 800 °C using TGA thermal analysis may be 99% or more.

The (D) zinc oxide has a peak position 2θ value in the range of 35 to 37 ° when analyzed by X-ray diffraction (XRD), and based on the measured FWHM value (full width at half maximum of the diffraction peak), a crystallite size value calculated by applying to Scherrer's equation represented by Equation 1 of 1,000 to 2,000 Å, for example 1,200 to 1,800 Å, for example 1,300 to 1,700 Å, for example, 1,300 to 1,600 Å.

[Equation 1]

$$\text{crystallite size} = \frac{k\lambda}{\beta\cos\theta}$$

In Equation 1, k is the shape factor, $\lambda$ is the X-ray wavelength, $\beta$ is the FWHM value of the X-ray diffraction peak, and $\theta$ is the peak position value (peak position degree).

Specifically, the crystallite size may be measured using a high-resolution X-ray diffractometer (manufacturer: X'pert, device name: PRO-MRD), and may be measured regardless of the sample type (e.g., powder form), injection molded specimen). On the other hand, in the case of using an injection-molded specimen, XRD analysis may be performed after heat treatment at 600 °C for 2 hours in an air state to remove residual polymer for more accurate analysis.

Within the above crystallite size range, antibacterial properties, light resistance, and weather resistance of the thermoplastic resin composition and a molded product manufactured therefrom may be improved.

The (D) zinc oxide may have various shapes, for example, a spherical shape, a plate shape, a rod shape, and a combination thereof. In an embodiment, the zinc oxide may have various shapes, for example, a spherical shape, a plate shape, a rod shape, and the like except for a needle shape.

The (D) zinc oxide has a size ratio (B/A) between peak A in the 370 to 390 nm region and peak B in the 450 to 600 nm region when measuring photoluminescence (PL), that is, a PL size ratio of 0.01 to 1, for example 0.1 to 1, for example 0.1 to 0.5.

In the photoluminescence measurement, first, zinc oxide powder is put into a pelletizer having a diameter of 6 mm and compressed to prepare a specimen for measurement in a flat state, the specimen for measurement is irradiated with an incident He-Cd laser (KIMMON Co., 30 mW), the emitted spectrum can be detected using a CCD detector, and at this time, the temperature of the CCD detector is maintained at -70°C.

Within the above ranges, the thermoplastic resin composition and a molded product prepared therefrom may exhibit excellent antibacterial properties, light resistance, weather resistance, and the like.

The (D) zinc oxide may be prepared by melting zinc in the form of metal, heating to 850 to 1,000 °C, for example, 900 to 950 °C to vaporize it, injecting oxygen gas, cooling to 20 to 30 °C, and then heating it at 400 to 900 °C, for example, at 500 to 800 °C, for example, for 30 to 150 minutes, for example for 60 to 120 minutes.

The (D) zinc oxide may be included in an amount of 1 to 5 parts by weight, for example, 2 to 4 parts by weight, based on 100 parts by weight of the (A) polyalkyl (meth)acrylate resin. Within the above parts by weight ranges, antibacterial properties, light resistance, appearance characteristics, and impact resistance of the thermoplastic resin composition and a molded product manufactured therefrom may be improved.

### (E) Acrylic Rubber Modified Vinyl-based Graft Copolymer

The thermoplastic resin composition according to an embodiment may further include (E) an acrylic rubber modified vinyl-based graft copolymer in addition to the above components (A) to (D).

The acrylic rubber modified vinyl-based graft copolymer may be prepared according to any preparation method known to those skilled in the art, and the preparation method may include conventional polymerization methods, for example, emulsion polymerization, suspension polymerization, solution polymerization, and bulk polymerization. As a non-limiting example, it may be prepared by a method including preparing an acrylic rubber polymer, and then graft-polymerizing vinyl-based compounds including an aromatic vinyl compound and a vinyl cyanide compound on a core formed of one or more layers of the acrylic rubber polymer to form one or more shell layers.

The acrylic rubber polymer may be prepared using an acrylic monomer as a main monomer. The acrylic monomer may be one or more selected from ethyl acrylate, butyl acrylate, 2-ethylhexyl acrylate, and hexyl acrylate, but is not limited thereto.

The acrylic monomer may be copolymerized with one or more radically polymerizable other monomers. When copolymerized, an amount of the one or more radically polymerizable other monomers may be 5 to 30 wt%, for example 10 to 20 wt% based on the total weight of the acrylic rubber polymer.

In an embodiment, an average particle diameter of the acrylic rubber polymer may be greater than or equal to 100 nm, for example less than or equal to 500 nm, for example less than or equal to 450 nm, for example less than or equal to 400 nm, for example less than or equal to 350 nm, for example less than or equal to 300 nm, for example less than or equal to 250 nm, for example less than or equal to 200 nm, for example 100 to 500 nm, for example 100 to 450

nm, for example 100 to 400 nm, for example 100 to 350 nm, for example 100 to 300 nm, for example 100 to 250 nm, or for example 100 to 200 nm. Within the above particle size ranges, the thermoplastic resin composition may have excellent overall mechanical properties such as impact resistance and tensile strength, fluidity, and processability.

The aromatic vinyl compound included in the shell layer may be at least one selected from styrene, α-methylstyrene, p-methylstyrene, p-t-butylstyrene, 2,4-dimethylstyrene, chlorostyrene, vinyltoluene, and vinylnaphthalene, but is not limited thereto, and the vinyl cyanide compound included in the shell layer may be at least one selected from acrylonitrile, methacrylonitrile, and fumaronitrile, but is not limited thereto.

Based on the total weight of the acrylic rubber modified vinyl-based graft copolymer, the acrylic rubber polymer may be 40 to 60 wt%, for example 45 to 55 wt%.

In an embodiment, the acrylic rubber modified vinyl-based graft copolymer may be an acrylate-styrene-acrylonitrile graft copolymer.

A weight ratio of the (E) acrylic rubber modified vinyl-based graft copolymer and the (A) polyalkyl (meth)acrylate resin may be 1:1.5 to 1:4. Within the above ranges of the weight ratio, the impact resistance of the thermoplastic resin composition may be improved.

## (F) Additives

In addition to the components (A) to (E), the thermoplastic resin composition according to an embodiment may further include one or more additives required in order to balance physical properties while exhibiting excellent scratch resistance, wear resistance, and antibacterial properties, or one or more additives necessary according to a final use of the thermoplastic resin composition.

Specifically, the additives may include at least one additive selected from a flame retardant, a nucleating agent, a coupling agent, a filler, a plasticizer, a lubricant, a release agent, a heat stabilizer, an antioxidant, an ultraviolet (UV) stabilizer, a pigment, a dye, and the like, which may be used alone or in a combination of two or more.

These additives may be appropriately included within a range that does not impair the physical properties of the thermoplastic resin composition, and specifically, may be included in an amount of less than or equal to 20 parts by weight based on 100 parts by weight of the (A) polyalkyl (meth) acrylate resin, but are not limited thereto.

On the other hand, the thermoplastic resin composition according to an embodiment may be mixed with other resin or other rubber component and used together.

Another embodiment provides a molded product produced using a thermoplastic resin composition according to an embodiment. The molded product may be produced by various methods known in the art, such as injection molding and extrusion molding using the thermoplastic resin composition.

Hereinafter, the present invention is illustrated in more detail with reference to examples. These examples, however, are not in any sense to be interpreted as limiting the scope of the invention.

## Examples 1 to 5 and Comparative Examples 1 to 6

The thermoplastic resin compositions of Examples 1 to 5 and Comparative Examples 1 to 6 were prepared according to the component content ratios described in Table 1, respectively.

Specifically, the components described in Table 1 were quantitatively and continuously introduced into a feed section of a twin-screw extruder (L/D = 44, Φ = 35 mm) and melt/kneaded at about 260 °C, preparing each of the thermoplastic resin compositions as a pellet. Subsequently, after drying the thermoplastic resin compositions at about 80 °C for about 2 hours, specimens for physical properties and gloss were prepared by using a 6 oz injection molding machine set at a cylinder temperature of about 250 °C and a mold temperature of about 60 °C. The measured properties are shown in Tables 2 and 3.

In Table 1, contents of the components (B) to (D) were expressed in parts by weight based on 100 parts by weight the of the component (A), but in Example 5 and Comparative Examples 5 and 6 including the component (E), the contents of the components (B) to (D) were expressed in parts by weight based on 100 parts by weight of the components (A) and (E).

(Table 1)

| | Examples | | | | | Comparative Examples | | | | | |
|---|---|---|---|---|---|---|---|---|---|---|---|
| | 1 | 2 | 3 | 4 | 5 | 1 | 2 | 3 | 4 | 5 | 6 |
| (A) | 100 | 100 | 100 | 100 | 70 | 100 | 100 | 100 | 100 | 70 | 50 |
| (B) | 1 | 2 | 2 | 2 | 2 | 2 | - | 2 | 2 | - | 2 |

(continued)

| | Examples | | | | | Comparative Examples | | | | | |
|---|---|---|---|---|---|---|---|---|---|---|---|
| | 1 | 2 | 3 | 4 | 5 | 1 | 2 | 3 | 4 | 5 | 6 |
| (C) | 4 | 4 | 4 | 2 | 4 | - | 4 | 1 | 4 | - | 4 |
| (D) | 4 | 4 | 2 | 4 | 4 | 4 | 4 | 4 | - | - | 4 |
| (E) | - | - | - | - | 30 | - | - | - | - | 30 | 50 |

Each component described in Table 1 is as follows.

(A) Polyalkyl (meth) acrylate resin
A polymethyl methacrylate resin (V040, Arkema S.A.) having a glass transition temperature (Tg) of about 120 °C was used.
(B) Core-shell copolymer including an acrylic-based rubber polymer core and a (meth)acrylate-based shell
A core-shell copolymer having a butyl acrylate-styrene crosslinked copolymer core and a polymethyl methacrylate shell formed thereon and including about 50 wt% of the butyl acrylate-styrene cross-linked copolymer core and about 50 wt% of the polymethyl methacrylate shell was used.
(C) Siloxane-polyester copolymer
A compound represented by Chemical Formula 2 (Tegomer® H-Si 6441 P, Evonik Corp.) was used:

[Chemical Formula 2]

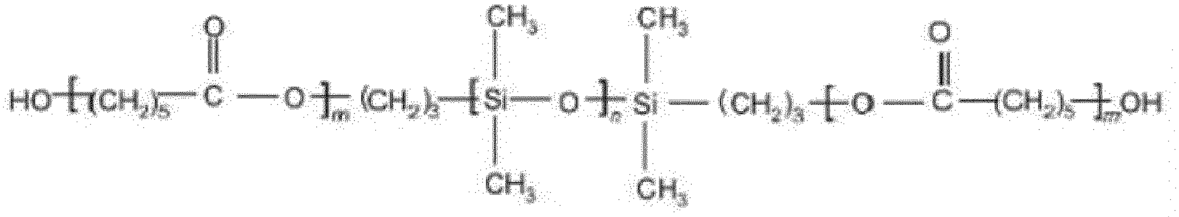

$n / m = 30 / 18$

(D) Zinc oxide
KS-1 of Hanil Chemical Co., Ltd. was used.
(E) Acrylic rubber modified vinyl-based graft copolymer
A core-shell copolymer prepared by forming a styrene-acrylonitrile copolymer shell on a butyl acrylate-styrene crosslinked copolymer core and including about 50 wt% of the butyl acrylate-styrene crosslinked copolymer core and about 50 wt% of the styrene-acrylonitrile copolymer shell, wherein the core had an average particle diameter of about 250 nm, was used.

## Evaluation of Physical Properties

The physical property evaluation results are shown in Tables 2 and 3.

(1) Abrasion resistance: After rubbing the surface of a specimen having a size of 100 mm x 100 mm x 3.2 mm with a white cotton cloth 10 times, the gloss at a reflection angle of 20 ° before and after friction was measured according to ASTM D523, and the gloss retention rate was calculated. At this time, if the initial gloss was 100 GU and the gloss after rubbing was 80 GU, the gloss retention rate was defined as 80%. As a specimen was more worn after the rubbing, of which gloss was more changed, a higher gloss retention rate was judged to be more excellent wear resistance.
(2) Scratch resistance: A specimen with a size of 100 mm x 100 mm x 3.2 mm was evaluated with respect to scratch resistance by measuring a brightness change value (Delta L) on the surface of the specimen before/after the scratch evaluation with an Erichsen scratch tester to compare scratch resistance. When the specimen was scratched, since

fine cracks occurred on the surface of the specimens and thus increased brightness, a higher Delta L was judged to be lower scratch resistance.

(3) Water resistance: A notched 1/8 inch specimen for measuring Izod impact strength according to ASTM D256 were measured with respect to Izod Impact strength before/after being left for 300 hours in a chamber of 60 °C and relative humidity (RH) of 95%, which was used to calculate an impact strength retention rate. A higher impact strength retention rate was judged to be more excellent water resistance.

(4) Chemical resistance: After placing an ASTM D638 type I specimen on a jig with a critical strain of 2.1%, applying alcohol thereto, and leaving it at room temperature for 168 hours, whether cracks occurred or not was examined with naked eyes.

(5) Heat resistance: A Vicat softening temperature (VST) was measured according to an evaluation method specified in ISO 306.

(6) Evaluation of Antibacterial Properties

According to a JIS Z 2801 antibacterial evaluation method, antibacterial activity of each specimen was measured by inoculating Staphylococcus aureus (ATCC 6538P) and Escherichia coli (ATCC 8739) into the specimen and culturing them for 24 hours at 35±1 °C under relative humidity (RH) of 90%. When the antibacterial activity was 2.0 or more, it considered to have an antibacterial effect.

Each specimen, after the water resistance and chemical resistance evaluations, was 5 times rubbed with distilled water and a sponge and then, dried for 24 hours.

(Table 2)

| | Examples | | | | | |
|---|---|---|---|---|---|---|
| | 1 | 2 | 3 | 4 | 5 | |
| Gloss retention rate (%) | 76 | 77 | 79 | 71 | 75 | |
| Delta L | 0.4 | 0.2 | 0.3 | 0.8 | 0.1 | |
| Impact strength retention rate (%) | 96 | 95 | 95 | 93 | 96 | |
| Crack generation | | does not occur | does not occur | does not occur | does not occur | does not occur |
| VST (°C) | | 102 | 102 | 103 | 104 | 95 |
| Antibacteri al activity value after water resistance evaluation | Staphyl ococcus aureus | 4.5 | 4.5 | 4.5 | 4.5 | 4.5 |
| | Escheric hia coli | 6.2 | 6.2 | 6.2 | 6.2 | 6.2 |
| Antibacteri al activity value after chemical resistance evaluation | Staphyl ococcus aureus | 4.5 | 4.5 | 4.5 | 4.5 | 4.5 |
| | Escheric hia coli | 6.2 | 6.2 | 6.2 | 6.2 | 6.2 |

(Table 3)

| | Comparative Examples | | | | | |
|---|---|---|---|---|---|---|
| | 1 | 2 | 3 | 4 | 5 | 6 |
| Gloss retention rate (%) | 43 | 65 | 52 | 74 | 40 | 73 |
| Delta L (°C) | 3.3 | 2.1 | 2.4 | 0.3 | 5.6 | 0.1 |
| Impact strength retention rate (%) | 75 | 90 | 80 | 96 | 72 | 92 |

(continued)

| | | Comparative Examples | | | | | |
|---|---|---|---|---|---|---|---|
| | 1 | 2 | 3 | 4 | 5 | 6 | |
| Crack generation | | occur | does not occur | occur | does not occur | occur | does not occur |
| VST | | 107 | 100 | 106 | 103 | 98 | 88 |
| Antibacteri al activity value after water resistance evaluation | Staphyloco ccus aureus | 4.5 | 4.5 | 4.5 | 0.0 | 0.0 | 4.5 |
| | Escherichi a coli | 6.2 | 6.2 | 6.2 | 0.2 | 0.4 | 6.2 |
| Antibacteri al activity value after chemical resistance evaluation | Staphyloco ccus aureus | 4.5 | 4.5 | 4.5 | 0.0 | 0.1 | 4.5 |
| | Escherichi a coli | 6.2 | 6.2 | 6.2 | 0.4 | 0.5 | 6.2 |

Referring to Tables 1 to 3, the thermoplastic resin composition of the examples exhibited excellent wear resistance, scratch resistance, water resistance, chemical resistance, heat resistance, and antibacterial properties, compared with the thermoplastic resin composition of the comparative examples.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

**1.** A thermoplastic resin composition, comprising

based on (A) 100 parts by weight of a polyalkyl (meth)acrylate resin,
(B) 1 to 3 parts by weight of a core-shell copolymer including an acrylic rubber polymer core and a (meth)acrylate-based shell;
(C) 2 to 5 parts by weight of a siloxane-polyester copolymer; and
(D) 1 to 5 parts by weight of zinc oxide (ZnO).

**2.** The thermoplastic resin composition of claim 1, wherein a glass transition temperature (Tg) of the (A) polyalkyl (meth) acrylate resin is 100 to 150 °C.

**3.** The thermoplastic resin composition of claim 1 or claim 2, wherein a weight average molecular weight of the (A) polyalkyl (meth) acrylate resin is 50,000 to 200,000 g/mol.

**4.** The thermoplastic resin composition of any one of claim 1 to claim 3, wherein the (A) polyalkyl (meth) acrylate resin is a polymethyl methacrylate resin.

**5.** The thermoplastic resin composition of any one of claim 1 to claim 4, wherein the (B) core-shell copolymer including the acrylic rubber polymer core and the (meth)acrylate shell is a core-shell copolymer including an acrylic rubber polymer core in which C1 to C20 linear alkyl acrylate monomers and aromatic vinyl monomers are cross-linking copolymerized; and a shell in which a (meth)acrylate-based compound is graft-copolymerized onto the acrylic rubber polymer core.

**6.** The thermoplastic resin composition of any one of claim 1 to claim 5, wherein the (B) core-shell copolymer including the acrylic rubber polymer core and the (meth)acrylate shell is a core-shell copolymer in which polymethyl methacrylate forms a shell on the butyl acrylate-styrene crosslinked copolymer core.

**7.** The thermoplastic resin composition of any one of claim 1 to claim 6, wherein an average particle diameter of the acrylic rubber polymer is 0.5 to 5.0 μm.

**8.** The thermoplastic resin composition of any one of claim 1 to claim 7, wherein the (C) siloxane-polyester copolymer is represented by Chemical Formula 1:

[Chemical Formula 1]

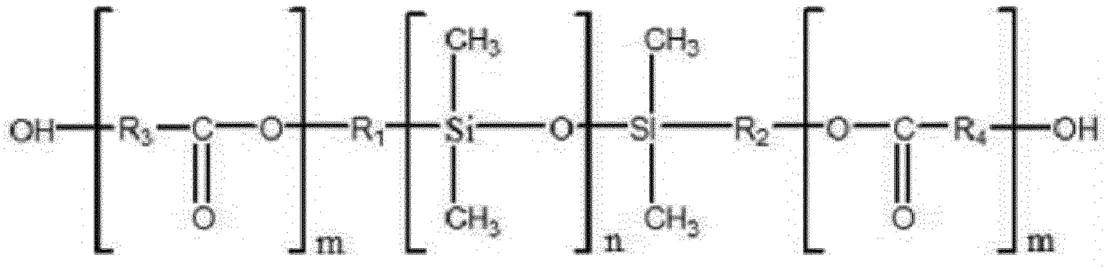

wherein, in Chemical Formula 1, $R_1$, $R_2$, $R_3$ and $R_4$ are independently an alkylene group having 1 to 5 carbon atoms, m and n are integers greater than or equal to 1.

**9.** The thermoplastic resin composition of any one of claim 1 to claim 8, wherein the (D) zinc oxide has an average particle diameter of 0.5 to 3 $\mu$m and a BET specific surface area of 1 to 10 $m^2/g$.

**10.** The thermoplastic resin composition of any one of claim 1 to claim 9, wherein the (D) zinc oxide has a peak position $2\theta$ value of 35 to 37 ° in X-ray diffraction (XRD) analysis, and a crystallite size value of 1,000 to 2,000 Å according to Equation 1:

[Equation 1]

$$\text{crystallite size} = \frac{k\lambda}{\beta\cos\theta}$$

wherein, in Equation 1, k is the shape factor, $\lambda$ is the X-ray wavelength, $\beta$ is the FWHM value of the X-ray diffraction peak, and $\theta$ is the peak position value (peak position degree).

**11.** The thermoplastic resin composition of any one of claim 1 to claim 10, wherein the (D) zinc oxide has a size ratio (B/A) of 0.01 to 1 between peak A of 370 to 390 nm and peak B of 450 to 600 nm when measuring photoluminescence.

**12.** The thermoplastic resin composition of any one of claim 1 to claim 11, wherein (E) acrylic rubber modified vinyl-based graft copolymer is further included.

**13.** The thermoplastic resin composition of claim 12, wherein a weight ratio of the (E) acrylic rubber modified vinyl-based graft copolymer and the (A) polyalkyl (meth) acrylate resin is 1 : 1.5 to 1 : 4.

**14.** The thermoplastic resin composition of any one of claim 1 to claim 13, wherein at least one additive selected from a flame retardant, a nucleating agent, a coupling agent, a filler, a plasticizer, an impact modifier, a lubricant, a release agent, a heat stabilizer, an antioxidant, a UV stabilizer, a pigment, and a dye is further added.

**15.** A molded product manufactured from the thermoplastic resin composition of any one of claim 1 to claim 14.

**INTERNATIONAL SEARCH REPORT**

International application No.
**PCT/KR2022/001601**

**A. CLASSIFICATION OF SUBJECT MATTER**

**C08L 33/14**(2006.01)i; **C08L 51/04**(2006.01)i; **C08L 83/10**(2006.01)i; **C08K 3/22**(2006.01)i

According to International Patent Classification (IPC) or to both national classification and IPC

**B. FIELDS SEARCHED**

Minimum documentation searched (classification system followed by classification symbols)

C08L 33/14(2006.01); C08F 265/06(2006.01); C08J 5/00(2006.01); C08K 3/013(2018.01); C08K 3/22(2006.01); C08K 5/00(2006.01); C08L 25/12(2006.01); C08L 51/06(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 열가소성 수지 조성물 (thermoplastic resin composition), 아크릴계 고무 (acrylate rubber), 코어-쉘 (core-shell), 산화아연 (zinc oxide)

**C. DOCUMENTS CONSIDERED TO BE RELEVANT**

| Category* | Citation of document, with indication, where appropriate, of the relevant passages | Relevant to claim No. |
|---|---|---|
| A | WO 2019-020685 A1 (INEOS STYROLUTION GROUP GMBH) 31 January 2019 (2019-01-31)<br>See claims 1-15; and pages 16 and 28. | 1-3 |
| A | KR 10-2016-0026125 A (SAMSUNG SDI CO., LTD.) 09 March 2016 (2016-03-09)<br>See claims 1, 3 and 5; example 3; and table 1. | 1-3 |
| A | KR 10-2020-0065294 A (LOTTE CHEMICAL CORPORATION) 09 June 2020 (2020-06-09)<br>See entire document. | 1-3 |
| A | KR 10-2015-0067573 A (LG CHEM, LTD.) 18 June 2015 (2015-06-18)<br>See entire document. | 1-3 |
| A | KR 10-2016-0129961 A (LOTTE ADVANCED MATERIALS CO., LTD.) 10 November 2016 (2016-11-10)<br>See entire document. | 1-3 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2022** | **13 May 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**

International application No.
**PCT/KR2022/001601**

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **13**
because they relate to parts of the international application that do not comply with the prescribed requirements to such an extent that no meaningful international search can be carried out, specifically:

Claim 13 refers to a multiple dependent claim not meeting the requirement of PCT Rule 6.4(a).

3. ☑ Claims Nos.: **4-12, 14, 15**
because they are dependent claims and are not drafted in accordance with the second and third sentences of Rule 6.4(a).

Form PCT/ISA/210 (continuation of first sheet) (July 2019)

**INTERNATIONAL SEARCH REPORT**
**Information on patent family members**

International application No.
**PCT/KR2022/001601**

| Patent document cited in search report | Publication date (day/month/year) | Patent family member(s) | Publication date (day/month/year) |
|---|---|---|---|
| WO 2019-020685 A1 | 31 January 2019 | CN 111511831 A | 07 August 2020 |
| | | EP 3658620 A1 | 03 June 2020 |
| | | US 11274198 B2 | 15 March 2022 |
| | | US 2020-0165429 A1 | 28 May 2020 |
| KR 10-2016-0026125 A | 09 March 2016 | KR 10-1719034 B1 | 22 March 2017 |
| | | US 10273355 B2 | 30 April 2019 |
| | | US 2016-0060446 A1 | 03 March 2016 |
| KR 10-2020-0065294 A | 09 June 2020 | KR 10-2200875 B1 | 11 January 2021 |
| KR 10-2015-0067573 A | 18 June 2015 | KR 10-1760976 B1 | 04 August 2017 |
| KR 10-2016-0129961 A | 10 November 2016 | KR 10-1795134 B1 | 08 November 2017 |

Form PCT/ISA/210 (patent family annex) (July 2019)